# EUROPEAN PATENT APPLICATION

(11) **EP 4 822 558 A1**
(43) Date of publication of application: **14.10.2026**
(21) Application number: 26167448.5
(22) Date of filing: 25.03.2026
(51) Int. Cl.: G06F 16/903

(54) **KNOWLEDGE GRAPH-BASED RETRIEVAL-AUGMENTED GENERATION**

(30) Priority: 08.04.2025 CN 202510431885
(71) Applicant: Robert Bosch GmbH, 70442 Stuttgart (DE)
(72) Inventor: ZHANG, Hansi, Shanghai, 200335 (CN); LIU, Tianyang, Shanghai, 200335 (CN); SHEN, Xiaozhi, Shanghai, 200335 (CN); PU, Lingbo, Shanghai, 200335 (CN)
(74) Representative: Isarpatent

(57) **Abstract**

The present disclosure provides a method for knowledge graph-based retrieval-augmented generation, comprising: receiving a current query; obtaining a query decomposition result for the current query, wherein the query decomposition result comprises a plurality of key-value pairs, and a key in each key-value pair of the plurality of key-value pairs corresponds to one or more entities in a knowledge graph; and generating a retrieval result for the current query based on one or more target subgraphs, among a plurality of subgraphs of the knowledge graph, that match the query decomposition result.

## Description

### Technical Field

The present disclosure relates generally to the field of computers, and more specifically, to methods and apparatuses for knowledge graph-based retrieval-augmented generation.

### Background

Retrieval-Augmented Generation (RAG) is a hybrid approach that combines information retrieval with text generation. It is used to retrieve information from a document collection for an input query and generate a response to the input query based on the retrieved information. RAG is commonly applied in Natural Language Processing (NLP) tasks such as question-answering systems, intelligent chatbots, and information retrieval.

### Summary of the Invention

According to one aspect of the present disclosure, a method for knowledge graph-based retrieval-augmented generation is provided, comprising: receiving a current query; obtaining a query decomposition result for the current query, wherein the query decomposition result comprises a plurality of key-value pairs, and a key in each key-value pair of the plurality of key-value pairs corresponds to one or more entities in a knowledge graph; and generating a retrieval result for the current query based on one or more target subgraphs, among a plurality of subgraphs of the knowledge graph, that match the query decomposition result.

According to another aspect of the present disclosure, an apparatus for knowledge graph-based retrieval-augmented generation is provided, comprising: a memory and a processor. The processor is coupled with the memory and is configured to perform the method according to any one of various examples of the present disclosure.

According to still another aspect of the present disclosure, a computer-readable medium is provided storing a computer program comprising instructions, the instructions, when executed by a processor, causing the processor to be configured to perform the method according to any one of various examples of the present disclosure.

According to yet another aspect of the present disclosure, a computer program product is provided that includes computer executable instructions that, when executed, cause one or more processors to perform the method according to any one of various examples of the present disclosure.

### Brief Description of the Drawings

The various examples of the subject matter to be protected are described by way of typical examples with reference to the accompanying drawings. The same reference signs are used in different accompanying drawings to denote the same or similar components.
FIG. 1 illustrates a schematic diagram of the principle of a knowledge graph-based RAG mechanism according to an example embodiment of the present disclosure.
FIG. 2 illustrates a schematic diagram of the architecture of a knowledge graph-based RAG system according to an example embodiment of the present disclosure.
FIG. 3 illustrates a schematic diagram of an example operational flow performed by a knowledge graph-based RAG system according to an example embodiment of the present disclosure.
FIG. 4 illustrates an example flowchart of a method for knowledge graph-based RAG according to an example embodiment of the present disclosure.
FIG. 5 illustrates an exemplary apparatus for knowledge graph-based RAG according to an example embodiment of the present disclosure.

### Detailed Description of the Embodiments

In the following description, numerous specific details are set forth to provide a thorough understanding of the examples of the present disclosure. However, those skilled in the relevant art will recognize that the present disclosure can be practiced without one or more of the specific details, or by using alternative methods, components, etc., to practice the present disclosure. In some instances, well-known structures and operations are not shown or described in detail to avoid unnecessarily obscuring the present disclosure.

RAG is typically used in conjunction with Large Language Models (LLMs) to perform various NLP tasks, aiming to mitigate issues commonly encountered in LLM applications-such as LLM hallucinations, lack of domain-specific knowledge, and outdated training corpora-by incorporating external information sources. However, the performance of conventional RAG in practical application scenarios, particularly those requiring the generation of highly accurate responses, often fails to meet requirements. The aforementioned issues with conventional RAG may stem from several reasons. On one hand, when retrieving information from a document collection, conventional RAG first splits each document into chunks and then retrieves relevant information based on individual chunks. This approach often causes conventional RAG to overlook the relationships between chunks. Furthermore, conventional RAG also ignores the relationships within the data of a chunk. These relationships refer to semantic connections, which are crucial for understanding the actual meaning of the data. Consequently, neglecting semantic relationships can lead to conventional RAG failing to retrieve accurate information in some cases. On the other hand, conventional RAG lacks the ability to filter source information. Instead, its source information originates from documents that are not closely related, thereby introducing noise during the information retrieval process. Additionally, the data retrieved using conventional RAG often includes conflicting or non-factual information. The combined effects of these aspects typically adversely reduce the accuracy of responses generated by conventional RAG.

The present disclosure proposes an improved Knowledge Graph (KG)-based RAG mechanism for generating accurate responses to input queries. The KG-based RAG mechanism of the present disclosure may perform an information retrieval process and a text generation process for an input query. The information retrieval process aims to retrieve graph elements containing relational knowledge data relevant to the input query from a knowledge graph constructed based on a document collection. The text generation process aims to generate a response to the input query based on the retrieved graph elements. Compared to conventional RAG, which retrieves relevant information individually from various chunks for an input query, the KG-based RAG mechanism of the present disclosure fully leverages the characteristics of knowledge graphs-providing structured, semantically related, and fact-based knowledge data-to facilitate the generation of more accurate retrieval results for the input query, thereby producing accurate responses to the input query.

The KG-based RAG mechanism of the present disclosure will be described in further detail below with reference to the accompanying drawings.

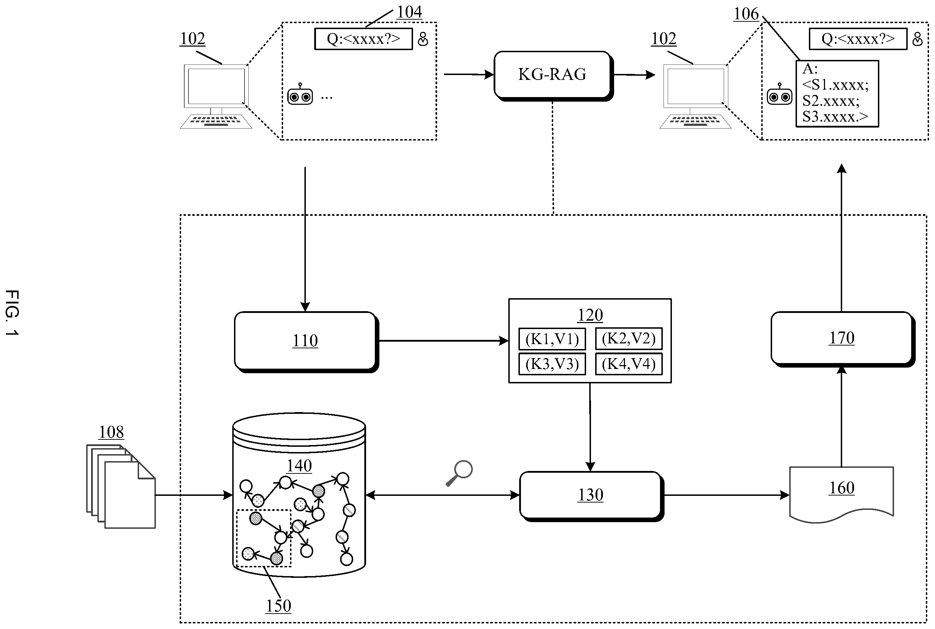

FIG. 1 illustrates a schematic diagram of the principle of a knowledge graph-based RAG mechanism according to an example embodiment of the present disclosure. The KG-based RAG mechanism of the present disclosure (labeled as KG-RAG in FIG. 1 for simplicity) may be implemented as a service or application accessible to users via client devices 102, and may be implemented locally or remotely on the client devices 102. As shown in FIG. 1, a user may input a current query 104 at a client device 102. The KG-based RAG mechanism of the present disclosure may perform an information retrieval process based on a knowledge graph for this current query 104 to generate a retrieval result. The KG-based RAG mechanism of the present disclosure may also generate an answer 106 for the current query 104 based on the retrieval result. This answer 106 may be presented to the user via the client device 102.

For ease of understanding, the principles of the KG-based RAG mechanism of the present disclosure will be described in detail below in conjunction with an example application scenario of fault maintenance in the field of intelligent manufacturing. It should be understood that in the field of intelligent manufacturing, there is often a need to efficiently handle fault events to reduce production equipment downtime and thereby improve production efficiency. In this context, applying the KG-based RAG mechanism of the present disclosure helps accurately retrieve information related to handling a fault event when it occurs, thereby further contributing to efficient fault maintenance. In this example application scenario, the KG-based RAG mechanism of the present disclosure may be implemented as a question-answering system for fault maintenance. When a fault event occurs at a production site, a user (e.g., a technician responsible for equipment maintenance) may input a query describing the fault event into this question-answering system. The question-answering system may use the KG-based RAG mechanism of the present disclosure to retrieve knowledge data related to the query from a knowledge graph storing knowledge data associated with historical fault events, and generate an answer to the query based on the retrieval result. This answer may be provided to the user via the question-answering system to guide how to resolve the occurred fault event.

The KG-based RAG mechanism may perform an operation 110 of receiving a current query. In the aforementioned example application scenario for fault maintenance, the current query may include a description of a current fault event. For example, an exemplary current query could be: "Workstation No. 2 alarm, component C, subassembly No. 004 F03 function failure, how to handle?"

Then, the KG-based RAG mechanism may obtain a query decomposition result 120 for this current query. The query decomposition result 120 contains a series of key elements determined from the current query. These key elements contain important information extracted from the current query and may serve as a basis for retrieving knowledge data related to the current query from the knowledge graph 140. In one example, the query decomposition result 120 may be represented as a plurality of key-value pairs, where each key-value pair includes a key and its value. Each key-value pair may characterize the current query in one aspect or dimension.

The key in each key-value pair in the query decomposition result 120 may correspond to one or more entities in the knowledge graph 140, which helps retrieve knowledge data matching the query decomposition result 120 from the knowledge graph 140 more efficiently and accurately. In one example, an entity set may be predetermined, which includes various entities contained in the knowledge graph 140. Then, when generating the query decomposition result 120, it can be stipulated that the keys in the query decomposition result 120 should belong to this entity set, so that for each key in the query decomposition result 120, a corresponding entity may be found in the knowledge graph 140. FIG. 1 illustrates that the query decomposition result 120 may exemplarily include four key-value pairs: {(K1, V1), (K2, V2), (K3, V3), (K4, V4)}. For example, K1 may be "Workstation", V1 may be "No. 2"; K2 may be "Component ID", V2 may be "C"; K3 may be "Subassembly", V3 may be "004"; K4 may be "Phenomenon Description", V4 could be "F03 function failure". In one example, the value of one or more keys in the query decomposition result 120 may be empty.

Based on the query decomposition result 120, an information retrieval process 130 may be executed to find knowledge data matching the query decomposition result 120 in the knowledge graph 140. The knowledge graph is a semantic network that reveals relationships between knowledge entities, providing a rich, machine-understandable semantic model. The knowledge graph 140 may be constructed based on multiple documents 108. These documents may adopt various file formats and store data in various data formats. In the example application scenario for fault maintenance described above, each document may record a historical fault event. The historical fault event refers to a fault event that occurred previously. A document for a specific historical fault event may record information related to various aspects or dimensions of that historical fault event, including, for example, the time, location, components or subcomponents involved, phenomenon description, cause, resolution measures, etc., of the historical fault event. Recording the above information related to historical fault events may help provide references for other fault events that may occur subsequently.

The knowledge graph 140 may be constructed based on multiple documents 108 in any suitable manner. By constructing the knowledge graph 140, knowledge extracted from multiple documents 108 may be represented as entities and relationships in the knowledge graph 140. In one example, an ontology-based knowledge graph construction method may be adopted, first constructing an ontology and then populating the ontology with knowledge data extracted from multiple documents 108 to generate the knowledge graph 140. The knowledge graph 140 may be represented and stored in any manner known in the art. In one example, the knowledge graph 140 may be represented and stored in the form of a Resource Description Framework (RDF) graph. RDF is a standardized framework (schema) for knowledge graphs. In an RDF graph, each piece of knowledge is organized in the format of a triple {S, P, O}, where S (abbreviation for Subject) may represent the subject, O (abbreviation for Object) may represent the object related to the subject, and P (abbreviation for Predicate) may represent the relationship between the subject and the object. In one example, an RDF graph may be represented as a directed graph, where entities are visually represented using circles and relationships between entities are represented using directed edges with arrows. Entities in the knowledge graph may also have one or more attribute values (or attribute descriptions) that describe different dimensional characteristics of the entities. In one example, attribute values may be represented in string format.

The knowledge graph 140 may include multiple subgraphs. Each subgraph is a part of the knowledge graph 140. The collection of multiple subgraphs constitutes the knowledge graph 140. Each subgraph may include a set of entities and relationships among that set of entities. Two subgraphs among the multiple subgraphs may be interconnected. In one example, a specific entity may exist in one subgraph, while the same specific entity may exist in another subgraph. That is, the specific entity overlaps in the two subgraphs. In this example, the two subgraphs may be connected by merging the overlapping specific entity in the two subgraphs. In another example, there may be a relationship between a specific entity in one subgraph and another specific entity in another subgraph. In this example, the two subgraphs may be connected based on that relationship. In one example, there may be a correspondence between subgraphs in the knowledge graph 140 and documents among the multiple documents 108 that provide knowledge data. For example, the knowledge data extracted from one document may be stored in a corresponding subgraph. In the example application scenario for fault maintenance described above, where each document records information associated with a corresponding historical fault event, each subgraph may correspond to a respective historical fault event.

Performing information retrieval process 130 may involve searching for subgraphs in knowledge graph 140 that match query decomposition result 120. In the present disclosure, for simplicity, subgraphs that match query decomposition result 120 are referred to as target subgraphs. Each target subgraph includes knowledge data related to the current query. FIG. 1 exemplarily illustrates target subgraph 150 determined from the knowledge graph 140.

Based on the target subgraph 150, retrieval result 160 may be generated. In one example, knowledge data in RDF form may be extracted from target subgraph 150 to generate the retrieval result 160.

For the retrieval result 160, text generation process 170 may be performed to generate answer 106 for the current query. In one example, an answer generation model may be used to generate the answer 106. In the example application scenario for fault maintenance described above, the generated answer 106 may be used to guide how to handle the current fault event. For example, the answer 106 may include a series of steps describing an operation procedure for resolving the current fault event.

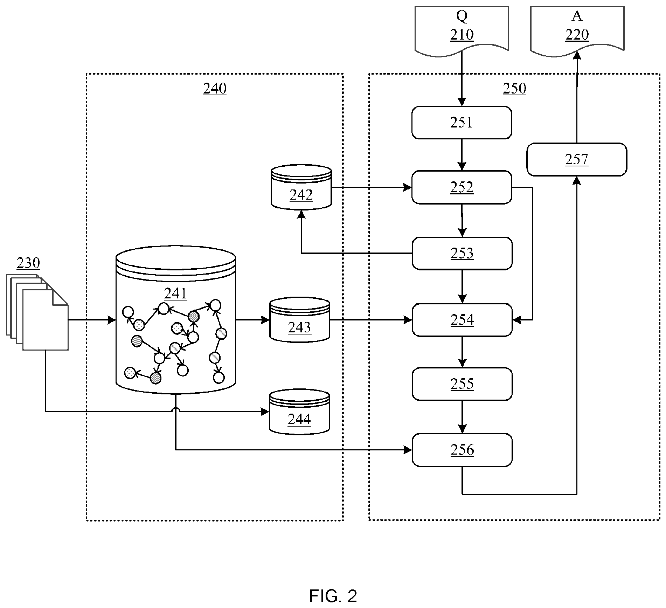

Specific operations of the knowledge graph-based RAG mechanism of the present disclosure in performing the information retrieval process and the text generation process will be described in detail below with reference to FIG. 2.

It should be understood that although the principles of the knowledge graph-based RAG mechanism of the present disclosure have been discussed above in conjunction with the application scenario of a question-answering system for fault maintenance, the above application scenario is merely an example, and the knowledge graph-based RAG mechanism of the present disclosure can be similarly applied to any other application scenario.

FIG. 2 illustrates a schematic diagram of the architecture of a knowledge graph-based RAG system 250 according to an example embodiment of the present disclosure. The knowledge graph-based RAG system 250 may be used to implement the knowledge graph-based RAG mechanism discussed above with reference to FIG. 1. As shown in FIG. 2, the knowledge graph-based RAG system 250 may receive a current query 210 and generate an answer 220 for the current query 210. In one example, the current query 210 may correspond to the current query 104 discussed above with reference to FIG. 1, and the answer 220 may correspond to the answer 106 discussed above with reference to FIG. 1.

FIG. 2 also illustrates a database 240 associated with the knowledge graph-based RAG system 250.

The database 240 may include a graph database 241. The graph database 241 is used to store a knowledge graph constructed based on multiple documents 230. The knowledge graph stored in the graph database 241 may include multiple subgraphs. Each subgraph may correspond to one or more documents among the multiple documents 230. In the example application scenario of the question-answering system for fault maintenance discussed above, each subgraph may correspond to one document recording information associated with a corresponding fault event. In other words, each subgraph may contain knowledge data related to a corresponding fault event.

The database 240 may include a historical query database 242. The historical query database 242 may store multiple historical queries. A historical query refers to a query previously processed by the knowledge graph-based RAG system 250. The historical query database 242 may also store a query decomposition result for each historical query.

The database 240 may include a vectorized knowledge graph database 243. Vectorized knowledge graph database 243 stores multiple vectorized subgraphs. Each vectorized subgraph may be obtained by performing a text vectorization operation (e.g., utilizing Embedding techniques) on text descriptions (e.g., attribute values discussed above) of entities in each subgraph of the knowledge graph. In one example, for a graph database (e.g., Neo4j) that provides node vectorization functionality, the graph database 241 and the vectorized knowledge graph database 243 shown in FIG. 2 may be merged together.

The database 240 may further include a vectorized document database 244. The vectorized document database 244 may store vectorized data obtained by performing text vectorization operations (e.g., using embedding technology) on each of the plurality of documents 230, respectively.

The knowledge graph-based RAG system 250 may generate a retrieval result for the current query 210 by accessing the database 240. This retrieval result may be further used to generate an answer 220 for the current query 210, as discussed in detail below.

The knowledge graph-based RAG system 250 may include a query receiving module 251. The query receiving module 251 may be configured to receive the current query 210. The query receiving module 251 may also be configured to provide the received current query 210 to a query reuse module 252.

The query reuse module 252 may be configured to determine whether a reusable historical query exists by accessing the historical query database 242. The query reuse module 252 may compare the received current query 210 with historical queries stored in the historical query database 242 to determine whether a target historical query matching the current query 210 exists in the historical query database 242. Determining whether a target historical query matching the current query 210 exists in the historical query database 242 may be based on a similarity between the current query 210 and each historical query in the historical query database 242. For example, when the similarity between the current query 210 and a certain historical query reaches or exceeds a predetermined threshold, it may be determined that the current query 210 matches that historical query, and that historical query may be determined as the target historical query. In one example, the similarity between the current query and the historical query discussed above may be measured by the cosine similarity between vectors. In this example, each historical query may be stored in the historical query database 242 in a vectorized form. The vectorized historical queries may be generated through text vectorization operations (e.g., using embedding technology). A similar vectorization operation may be performed on the current query 210. For example, the knowledge graph-based RAG system 250 may include an additional vectorization module (not shown in FIG. 2) configured to perform a vectorization operation on the current query to generate a vectorized current query. Then, the query reuse module 252 may compare the vectorized current query with the vectorized historical queries to calculate the cosine similarity between vectors, thereby determining whether a matching target historical query exists.

In a case where the query reuse module 252 determines that a target historical query matching the current query 210 exists, the query reuse module 252 may reuse the query decomposition result for that target historical query stored in the historical query database 242 as the query decomposition result for the current query 210. For example, the query decomposition result for the target historical query may be retrieved from the historical query database 242, and the retrieved query decomposition result may be used as the query decomposition result for the current query.

In a case where the query reuse module 252 determines that no target historical query matching the current query 210 exists, the query reuse module 252 may provide the current query 210 to a query decomposition module 253.

The query decomposition module 253 is configured to perform a query decomposition operation on the current query 210 to generate a query decomposition result for the current query 210. In one example, the query decomposition module 253 may be implemented using a query decomposition model. The query decomposition model may take the current query as input and output a query decomposition result for the current query. In one example, the query decomposition model may be implemented using an LLM. In this example, prompts may be used to cause the query decomposition model to provide the desired output. For example, the prompt may include the current query, a series of instructions for the LLM (e.g., what role the LLM should play, what steps it should perform, what requirements the output should meet, etc.), a set of input-output examples (each example including an input query and the desired query decomposition result for that query), and so on. In another example, the query decomposition model may be any other generative model specifically trained to perform query decomposition operations. In this example, the training data used to train the query decomposition model may include a plurality of data pairs, each data pair including a query as input and the desired query decomposition result for that query as output.

It should be understood that performing query decomposition operations using a query decomposition model may be time-consuming, which typically depends on the performance of the query decomposition model. The knowledge graph-based RAG mechanism of the present disclosure, when processing a current query, first determines whether a reusable historical query exists. In a case where a reusable historical query exists, the knowledge graph-based RAG mechanism of the present disclosure may directly reuse the query decomposition result of that historical query. Therefore, the knowledge graph-based RAG mechanism of the present disclosure, in some cases, avoids performing time-consuming query decomposition operations, contributing to the technical effects of improving processing efficiency and reducing latency.

The query decomposition result obtained via the query reuse module 252 or the query decomposition module 253 may include one or more key-value pairs, as discussed above in connection with FIG. 1. The key in each key-value pair in the query decomposition result may correspond to one or more entities in the knowledge graph stored in the graph database 241. In one example, for instance, when using a query decomposition model to generate the query decomposition result, the prompt may be used to specify that the keys in the query decomposition result should belong to a predetermined set of entities, wherein the set of entities includes each entity contained in the knowledge graph stored in the graph database 241. This ensures that the keys in the query decomposition result do not exceed the scope of entities in the knowledge graph, thereby helping to accurately retrieve graph elements matching the query decomposition result within the knowledge graph. In one example, the query decomposition result may also be vectorized. For example, a vectorized query decomposition result may be generated through a text vectorization operation (e.g., using embedding technology). Vectorizing the query decomposition result can help accurately locate graph elements matching the query decomposition result within the vectorized knowledge graph, thereby generating accurate retrieval results for generating an accurate answer to the current query.

The aforementioned query decomposition result may be stored in the historical query database together with the current query for use when processing subsequent queries. In one example, the knowledge graph-based RAG system 250 may include an additional query storage module configured to store the current query and the corresponding query decomposition result in the historical query database.

The query reuse module 252 or the query decomposition module 253 may provide the query decomposition result to a subgraph matching module 254. The subgraph matching module 254 may be configured to generate a candidate subgraph ranking list. The subgraph matching module 254 may calculate a matching score between each subgraph and the query decomposition result. For example, the matching score *S_{SGᵢ}* for subgraph *SGᵢ* may be calculated according to the following formula (1). 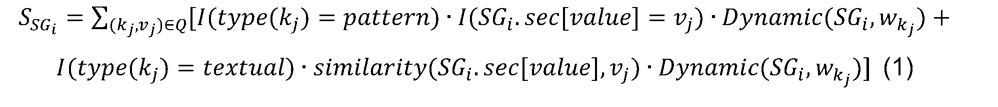 SSGi = Σ(kj,vj)∈Q[I(type(kj) = pattern) · I(SGi· sec[value] = vj) · Dynamic(SGi, wkj) + I(type(kj) = textual) · similarity(SGi. sec[value], vj)· Dynamic(SGi, wkj)] (1) wherein:
- *Q* denotes the query decomposition result, and (*kⱼ,vⱼ*) denotes the *j*-th key-value pair in the query decomposition result *Q,* where *kⱼ* denotes the key in the *j*-th key-value pair, and *vⱼ* denotes the value corresponding to the key *kⱼ* in the*j*-th key-value pair.
- *type*(*kⱼ*) denotes the type of the key *kⱼ.* The type of each key can be one of pattern or textual. When a key is used to characterize a property in the current query that has a fixed pattern (or can be understood as having a unique value), such as a component's part number, name, etc., the type of that key can be considered a pattern type. When a key is used to characterize a textual property in the current query, such as a phenomenon description, etc., the type of that key can be considered a textual type. In one example, an additional field can be added to the query decomposition result to indicate the type of each key. In one example, the query decomposition model discussed above can simultaneously indicate the type of each key when outputting the query decomposition result.
- *SGᵢ.sec*[*value*] denotes the attribute value of the entity *SGᵢ.sec* in the subgraph *SGᵢ* corresponding to the key *kⱼ.*
- *I(condition)* denotes a Boolean indicator function. When the condition specified within its parentheses is true, the value of *I(condition)* is 1; when the condition specified within its parentheses is false, the value of *I(condition)* is 0. According to the above formula, when the type of key *kⱼ* is pattern, the value of *I*(*type*(*kⱼ*) = *pattern*) is 1, and the value of *I*(*type*(*kⱼ*) *= textual*) is 0. In this case, it is further compared whether the value *vⱼ* of key *kⱼ* is identical to the attribute value *SGi.sec[value]* of the entity *SGᵢ.sec* corresponding to that key, i.e., whether *SGᵢ.sec*[*value*] *= vⱼ* holds. If *SGi.sec[value] = vⱼ* holds, then the value of *I*(*SGᵢ.sec*[*value*]=*vⱼ*) is 1, and the matching score *S_{SGᵢ}* depends on the normalized weighting factor *Dynamic*(*SGᵢ, w_{kⱼ}*). If *SGi.sec[value]* = *vⱼ* does not hold, then the value of *I*(*SGᵢ.sec*[*value*] = *vⱼ*) is 0, and the matching score *S_{SGᵢ}* equals 0. When the type of key *kⱼ* is textual, the value of *I*(*type*(*kⱼ*) *= pattern*) is 0, and the value of *I*(*type*(*kⱼ*) *= textual*) is 1. In this case, the text similarity *similarity*(*SGᵢ.sec*[*value*]*,vⱼ*) between the value *vⱼ* of key *kⱼ* and the attribute value *SGᵢ.sec*[*value*] of the entity *SGᵢ.sec* corresponding to that key is determined. In other words, in this case, the matching score *S_{SGᵢ}* depends on the product of the text similarity *similarity*(*SGᵢ.sec*[*value*]*,vⱼ*) and the normalized weighting factor *Dynamic*(*SGᵢ, w_{kⱼ}*)*.* In one example, the above text similarity *similarity*(*SGᵢ.sec*[*value*]*,vⱼ*) can be calculated by computing the cosine similarity between the vectorized attribute value *SGi.sec[value]* and the vectorized value *vⱼ*.
- *w_{kⱼ}* denotes the respective weight of each key *kⱼ* among the plurality of key-value pairs. The greater the weight assigned to a key, the greater its influence on calculating the matching score *S_{SGᵢ}.* Typically, a larger weight can be assigned to a key that has a greater impact on the accuracy of the retrieval result. In one example, the weight *w_{kⱼ}* can be pre-set, for example, based on expert opinion. In one example, the weight *w_{kⱼ}* may be dynamically adjusted; for instance, the weight *w_{kⱼ}* can be feedback-dynamically adjusted based on the accuracy of the generated retrieval results or answers.
- *Dynamic*(*SGᵢ, w_{kⱼ}*) denotes the normalized weighting factor for each key *kⱼ* with respect to subgraph *SGᵢ.* The effective keys among the keys *kⱼ* can be determined for subgraph *SGᵢ*, where an effective key is a key for which a corresponding entity exists in subgraph *SGᵢ.* Then, the respective weights of the effective keys can be summed to calculate a total weight. Next, the normalized weighting factor *Dynamic*(*SGᵢ, w_{kⱼ}*) for each key *kⱼ* with respect to subgraph *SGᵢ* can be calculated by dividing the weight of each key *kⱼ* by this total weight.

The subgraph matching module 254 can then select, from the plurality of subgraphs, the top-N subgraphs (e.g., *Sgᵢ,i, i =* 1 ... *N,* where *N* is an integer greater than 1) ranked by matching score as a set of candidate subgraphs, according to the respective matching scores of the plurality of subgraphs. The subgraph matching module 254 can then sort this set of candidate subgraphs in descending order of matching score to generate a candidate subgraph ranking list. For example, an exemplary candidate subgraph ranking list can be {SG₁, SG₇, SG₄, ... , SG_{N}} , indicating that the candidate subgraphs are arranged in order of matching score from highest to lowest as SG₁, SG₇, SG₄, up to SG_{N}.

The subgraph matching module 254 can provide the generated candidate subgraph ranking list to the re-ranking module 255. The reordering module 255 may be used to reorder a set of candidate sub-graphs in the candidate sub-graph sorting list. The re-ranking module 255 may, for each other ranking algorithm among one or more other ranking algorithms different from the ranking algorithm executed by the subgraph matching module 254, respectively determine a ranking result of a set of candidate subgraphs for that other ranking algorithm. Then, the re-ranking module 255 may determine a final ranking score for each candidate subgraph based on the ranking results generated for the various other ranking algorithms and the ranking result generated for the ranking algorithm executed by the subgraph matching module 254 (i.e., the ranking result determined according to the respective matching scores *S_{SGi}* of the candidate subgraphs). In one example, the following formula (2) may be used to calculate the final ranking score *RRF_{score}*(*SGᵢ*) for each candidate subgraph *SGᵢ.* ${RRF}_{score} \left({SG}_{i}\right) = {\sum }_{r ∈ R} \frac{1}{k + r \left({SG}_{i}\right)}$ (2) wherein:
- R represents the set of all ranking algorithms, which includes the ranking algorithm executed by the subgraph matching module 254 mentioned above and one or more other ranking algorithms.
- r represents one ranking algorithm in the set of all ranking algorithms.
- *r*(*SGᵢ*) represents the ranking result of the candidate subgraph *SGᵢ* under the ranking algorithm r.
- k represents a preset weight value.

In one example, the aforementioned one or more other ranking algorithms may be used to calculate, for each candidate subgraph, a matching degree between the query decomposition result and one or more documents corresponding to that candidate subgraph. In this example, the aforementioned other ranking algorithms may be referred to as document matching ranking algorithms. By employing document matching ranking algorithms, the matching degree between the query decomposition result and the subgraph, as well as the matching degree between the query decomposition result and the corresponding documents of the subgraph, can be fully considered simultaneously during the process of determining the candidate subgraph ranking list, thereby helping to more accurately locate subgraphs that match the query decomposition result. In one example, the aforementioned one or more document matching ranking algorithms may include the BM25 document relevance ranking algorithm, which is used to calculate the matching degree between the query decomposition result and the corresponding documents of the subgraph. In one example, the aforementioned one or more document matching ranking algorithms may be implemented using a relevance ranking model. This relevance ranking model may take the query decomposition result and the corresponding documents of the subgraph as input and output the matching degree between the query decomposition result and the corresponding documents of the subgraph. In one example, the relevance ranking model may be trained using training data, and the training data may include multiple data pairs, each data pair may include a query decomposition result as input, a corresponding document, and a matching degree between the query decomposition result and the document as output.

Then, the re-ranking module 255 may re-rank the set of candidate subgraphs in the candidate subgraph ranking list according to the final ranking score of each candidate subgraph calculated using formula (2). Through the re-ranking operation, the order of the set of candidate subgraphs in the candidate subgraph ranking list may change, for example, from {SG₁, SG₇, SG₄, ... , SG_{N}} in the example above to {SG₂, SG₄, SG₇,..., SG_{N}}.

It should be understood that although FIG. 2 explicitly shows that the knowledge graph-based RAG system 250 includes the re-ranking module 255, in another example, the re-ranking module 255 may be optional, i.e., the re-ranking operation may not be performed.

The re-ranking module 255 (or, in the absence of the re-ranking module 255, the subgraph matching module 254) may provide the candidate subgraph ranking list to the retrieval data extraction module 256. The retrieval data extraction module 256 is used to determine, according to the candidate subgraph ranking list, one or more (e.g., K, where K is a positive integer and the value of K is less than or equal to N) target subgraphs from which retrieval data is to be extracted, and to extract retrieval data from the target subgraphs respectively. In one example, the value of K is predetermined. The retrieval data extraction module 256 may take the top-K candidate subgraphs in the candidate subgraph ranking list as target subgraphs. Then, the retrieval data extraction module 256 may extract retrieval data from each target subgraph respectively. In one example, the retrieval data extraction module 256 may use a predetermined template to extract target retrieval data from the target subgraph. This predetermined template may be a template based on a graph query language (e.g., SPARQL query language). Using the predetermined template, graph elements related to the query decomposition result may be extracted from the target subgraph, for example, in the form of RDF data, as target retrieval data. In one example, considering that there may be information redundancy in the extracted target retrieval data (affected by the nature of RDF data itself), post-processing may be performed on the target retrieval data to generate the retrieval result. Through the post-processing operation, redundant RDF information in the target retrieval data can be compressed, thereby helping to efficiently and accurately generate an answer for the current query based on the retrieval result subsequently. It should be understood that the aforementioned post-processing operation is optional. In cases where the post-processing operation is not performed, the target retrieval data extracted from the target subgraph may be directly used as the retrieval result.

The retrieval data extraction module 256 may provide the retrieval result to the answer generation module 257. The answer generation module 257 may generate an answer 220 for the current query 210 based on the retrieval result. The answer generation module may be implemented using an answer generation model. In one example, the answer generation model may be implemented using an LLM. In this example, a Prompt may be used to cause the answer generation model to generate the answer 220 based on the retrieval result. In another example, the answer generation model may be implemented using any other generative model capable of generating an answer based on the retrieval result.

It should be understood that the architecture of the knowledge graph-based RAG system shown in FIG. 2 is only an example. Although the database 240 is shown as an external database to the knowledge graph-based RAG system 250 in FIG. 2, in another example, the database 240 may be an internal database of the knowledge graph-based RAG system. Furthermore, in other examples, the knowledge graph-based RAG system may include other modules not shown in FIG. 2 or omit one or more of the modules shown in FIG. 2. For example, in one example, the knowledge graph-based RAG system 250 may not include the answer generation module 257. In other words, the answer generation module 257 may be located outside the knowledge graph-based RAG system 250.

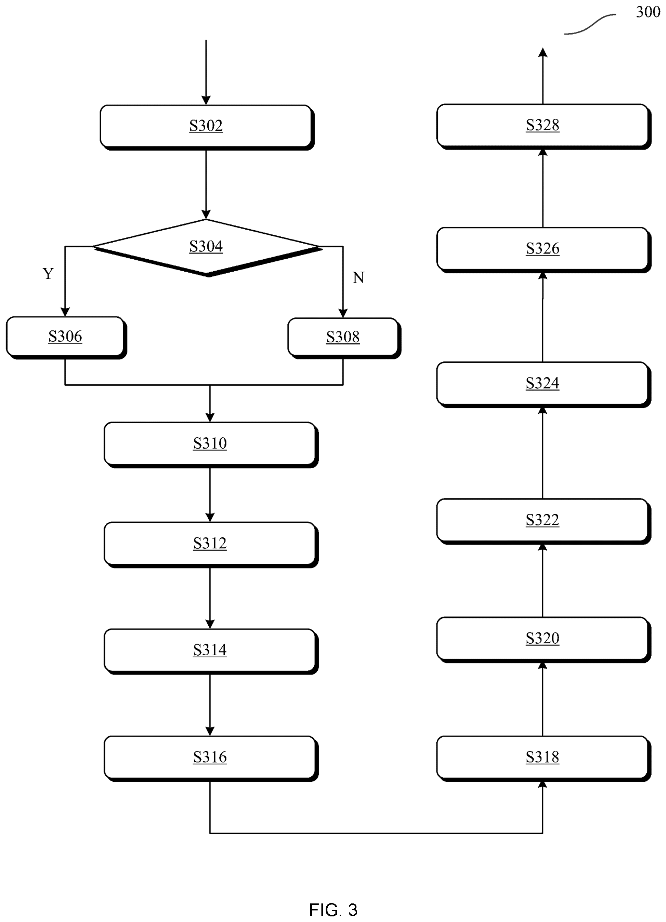

FIG. 3 illustrates a schematic diagram of an example operational flow performed by a knowledge graph-based RAG system according to an example embodiment of the present disclosure.

At S302, a current query may be received.

At S304, it may be determined whether a target historical query matching the current query exists in a historical query database. Whether a matching target historical query exists may be determined by comparing the current query with historical queries stored in the historical query database.

If it is determined at S304 that a target historical query matching the current query exists in the historical query database (as indicated by branch Y), the process may proceed to S306. At S306, the query decomposition result for the target historical query may be reused as the query decomposition result for the current query.

If it is determined at S304 that no target historical query matching the current query exists in the historical query database (as indicated by branch N), the process may proceed to S308. At S308, a query decomposition operation may be performed on the current query to generate a query decomposition result for the current query. In one example, the query decomposition operation may be performed using the query decomposition model discussed above in connection with FIG. 2.

The query decomposition result obtained via S306 or S308 may include a plurality of key-value pairs, wherein a key in each key-value pair may correspond to one or more entities in a knowledge graph (e.g., the knowledge graph stored in the graph database 241 discussed above in connection with FIG. 2).

At S310, the obtained query decomposition result, along with the current query, may be stored in the historical query database for use in processing subsequent queries.

At S312, a respective weight for each key in the query decomposition result may be determined. Then, a normalized weighting factor for each key with respect to each subgraph may be calculated according to the respective weight of each key, as discussed above in connection with formula (1).

At S314, a type of each key in the query decomposition result may be determined. In one example, the type of a key may be one of a pattern type or a textual type.

At S316, the value of each key in the plurality of key-value pairs may be compared with an attribute value of an entity in a subgraph corresponding to that key. In a case where the type of the key is the pattern type, it may be compared whether the value of the key is identical to the attribute value of the entity corresponding to the key. In a case where the type of the key is the textual type, a text similarity between the value of the key and the attribute value of the entity corresponding to the key may be compared. In one example, the example operational flow illustrated in FIG. 3 may further include a step of performing a text vectorization operation on the query decomposition result and the subgraph, respectively, and the aforementioned comparison may be performed on the vectorized query decomposition result and the vectorized subgraph.

At S318, a candidate subgraph ranking list may be generated. A matching score between the query decomposition result and each subgraph may be calculated. In one example, the matching score between the query decomposition result and each subgraph may be calculated, for example, using formula (1) discussed above in connection with FIG. 2, based on the weights determined at S312, the key types determined at S314, and the results of the comparison performed at S316. Then, based on the respective matching scores of the plurality of subgraphs, the top-N subgraphs in terms of matching scores may be determined as a set of candidate subgraphs. The set of candidate subgraphs may be sorted in descending order of matching scores to generate the candidate subgraph ranking list.

At S320, the set of candidate subgraphs in the candidate subgraph ranking list generated at S318 may be re-ranked. For example, the final ranking score for each candidate subgraph may be determined by combining ranking results generated using various ranking algorithms, for instance, using formula (2) discussed above in connection with FIG. 2, and the set of candidate subgraphs in the candidate subgraph ranking list may be re-ranked according to the final ranking scores of the respective candidate subgraphs. In one example, as discussed above in connection with FIG. 2, the ranking results generated using the various ranking algorithms include respective ranking results determined for one or more document matching ranking algorithms and a ranking result determined according to the respective matching scores of the candidate subgraphs calculated at S318. Each document matching ranking algorithm may be used to calculate a matching degree between the query decomposition result and one or more documents corresponding to each candidate subgraph in the set of candidate subgraphs. Through the aforementioned re-ranking operation, the order of the set of candidate subgraphs in the candidate subgraph ranking list may change. It should be understood that the re-ranking operation at S320 is optional. That is, in one example, re-ranking of the set of candidate subgraphs in the candidate subgraph ranking list may not be performed.

At S322, target subgraphs may be determined. In one example, based on the candidate subgraph ranking list, the top-K candidate subgraphs among the plurality of candidate subgraphs may be determined as one or more target subgraphs.

At S324, target retrieval data may be extracted from the target subgraphs. In one example, for each target subgraph among the one or more target subgraphs, target retrieval data, for example, in the form of RDF data, may be extracted using a predetermined template.

At S326, a retrieval result may be generated. In one example, post-processing may be performed on the target retrieval data extracted respectively for the one or more target subgraphs to compress redundant information in the target retrieval data.

At S328, an answer for the current query may be generated based on the retrieval result. In one example, the answer may be generated using, for example, an LLM-based answer generation model.

It should be understood that the example operational flow performed by the knowledge graph-based RAG system discussed above in connection with FIG. 3 is merely an example. In other examples, the example operational flow performed by the knowledge graph-based RAG system may include other steps not shown in FIG. 3 or may omit one or more of the steps shown in FIG. 3. Furthermore, the execution order of the steps shown in FIG. 3 is merely an example; in other examples, these steps may be executed in an order different from that shown in FIG. 3.

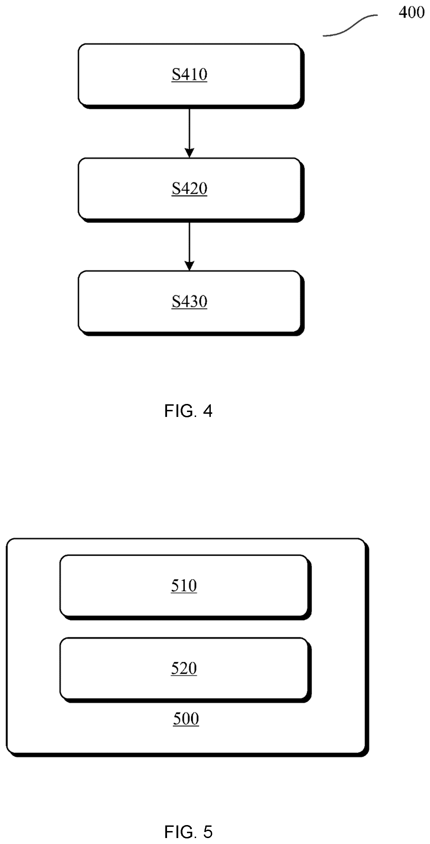

FIG. 4 illustrates an example flowchart of a method 400 for knowledge graph-based RAG according to an example embodiment of the present disclosure.

At step S410, a current query may be received.

At step S420, a query decomposition result for the current query received at S410 may be obtained. The query decomposition result may include a plurality of key-value pairs, and a key in each key-value pair of the plurality of key-value pairs corresponds to one or more entities in a knowledge graph. At step S430, a retrieval result for the current query may be generated based on one or more target subgraphs, among a plurality of subgraphs of the knowledge graph, that match the query decomposition result obtained at S420.

In one implementation, method 400 may further include determining one or more target subgraphs, among the plurality of subgraphs of the knowledge graph, that match the query decomposition result. Determining the one or more target subgraphs that match the query decomposition result may include generating a candidate subgraph ranking list; and determining, from a set of candidate subgraphs, top-K candidate subgraphs as the one or more target subgraphs according to the candidate subgraph ranking list.

In one implementation, generating the candidate subgraph ranking list may include: For each subgraph among the plurality of subgraphs, calculate a matching score between the query decomposition result and the subgraph; and select top-N subgraphs from the plurality of subgraphs as a set of candidate subgraphs according to respective matching scores of the plurality of subgraphs.

In one implementation, calculating the matching score between the query decomposition result and the subgraph may include: comparing a value of each key in the plurality of key-value pairs with an attribute value of an entity in the subgraph corresponding to the key; and calculating the matching score based on a result of the comparison.

In one implementation, the query decomposition result and the subgraph may be vectorized; and the aforementioned comparison may be performed on the vectorized query decomposition result and the vectorized subgraph.

In one implementation, the method 400 may further include determining a type of the key, wherein the type may include a pattern type or a textual type, and wherein, in response to determining that the type is the pattern type, the aforementioned comparison is used to determine whether the value of the key is identical to the attribute value of the entity corresponding to the key; or in response to determining that the type is the textual type, the aforementioned comparison is used to determine a text similarity between the value of the key and the attribute value of the entity corresponding to the key.

In one implementation, calculating the matching score between the query decomposition result and the subgraph may include: calculating the matching score according to a respective weight of each key in the plurality of key-value pairs.

In one implementation, generating the candidate subgraph ranking list may further include: re-ranking the set of candidate subgraphs. Re-ranking the set of subgraphs may include: for each document matching ranking algorithm among one or more document matching ranking algorithms, determining a ranking result of the set of candidate subgraphs; and calculating a final ranking score for each candidate subgraph based on respective ranking results determined for the one or more document matching ranking algorithms and a ranking result determined according to the respective matching scores.

In one implementation, obtaining the query decomposition result for the current query may include: determining whether a target historical query matching the current query exists in a historical query database, wherein the historical query database stores a plurality of historical queries and a query decomposition result for each historical query among the plurality of historical queries; and in response to determining that the target historical query exists, reusing the query decomposition result for the target historical query as the query decomposition result for the current query; or in response to determining that the target historical query does not exist, generating the query decomposition result for the current query by performing a query decomposition operation on the current query using a query decomposition model.

In one implementation, generating the retrieval result for the current query based on the one or more target subgraphs may include: for each target subgraph among the one or more target subgraphs, extracting target retrieval data from the target subgraph using a predetermined template; and performing post-processing on the target retrieval data extracted respectively for the one or more target subgraphs to generate the retrieval result.

In one implementation, the method 400 may further include: generating an answer for the current query based on the retrieval result using an answer generation model.

In one implementation, each subgraph among the plurality of subgraphs of the knowledge graph may be constructed based on a document recording a historical fault event; the current query may describe a current fault event; and the answer may indicate an operation procedure for resolving the current fault event.

It should be understood that the method 400 may also include any steps/processes for knowledge graph-based RAG according to the embodiments of the present disclosure described above.

FIG. 5 illustrates an exemplary apparatus 500 for knowledge graph-based RAG according to an embodiment.

The apparatus 500 may include at least one processor 510. The apparatus 500 may further include a memory 520 coupled to the at least one processor 510. The memory 520 may store computer-executable instructions that, when executed, cause the at least one processor 510 to: receive a current query; obtain a query decomposition result for the current query, wherein the query decomposition result comprises a plurality of key-value pairs, and a key in each key-value pair of the plurality of key-value pairs corresponds to one or more entities in a knowledge graph; and generate a retrieval result for the current query based on one or more target subgraphs, among a plurality of subgraphs of the knowledge graph, that match the query decomposition result. Furthermore, the at least one processor 510 may also be configured to perform any other operations of the method for knowledge graph-based RAG according to the embodiments of the present disclosure described above.

Embodiments of the present disclosure may be implemented in a computer-readable medium. The computer-readable medium may store a computer program comprising instructions. In one example aspect, the instructions, when executed by the processor, may cause the processor to: receiving a current query; obtaining a query decomposition result for the current query, wherein the query decomposition result comprises a plurality of key-value pairs, and a key in each key-value pair of the plurality of key-value pairs corresponds to one or more entities in a knowledge graph; and generating a retrieval result for the current query based on one or more target subgraphs, among a plurality of subgraphs of the knowledge graph, that match the query decomposition result. In another example aspect, the instructions, when executed by a processor, may cause the processor to implement other operations of the method for knowledge graph-based RAG discussed above in connection with FIG. 4.

Embodiments of the present disclosure may be implemented in a computer program product. The computer program product may include instructions. In one example aspect, the instructions, when executed, may cause the one or more processors to: receiving a current query; obtaining a query decomposition result for the current query, wherein the query decomposition result comprises a plurality of key-value pairs, and a key in each key-value pair of the plurality of key-value pairs corresponds to one or more entities in a knowledge graph; and generating a retrieval result for the current query based on one or more target subgraphs, among a plurality of subgraphs of the knowledge graph, that match the query decomposition result. In another example aspect, the instructions, when executed by a processor, may cause one or more processors to implement other operations of the method for knowledge graph-based RAG discussed above in connection with FIG. 4.

Various elements in one or more examples described herein may be implemented in hardware, software, or any combination thereof. Whether these elements are implemented as hardware or software may depend upon the particular application and design constraints imposed on the overall system.

By way of example, an element, or any portion of an element, or any combination of elements described may be implemented as a "processing system" that includes one or more processors (which may also be referred to as processing units). Examples of processors include microprocessors, microcontrollers, graphics processing units (GPUs), general-purpose GPUs (GPGPUs), central processing units (CPUs), application processors, digital signal processors (DSPs), reduced instruction set computing (RISC) processors, systems on a chip (SoCs), baseband processors, application-specific integrated circuits (ASICs), field-programmable gate arrays (FPGAs), programmable logic devices (PLDs), state machines, gated logic, discrete hardware circuits, and other suitable hardware configured to perform the various functions described throughout this disclosure. The one or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

If implemented in software, the elements may be stored on or encoded as one or more instructions or code on a computer-readable medium. Computer-readable media includes computer storage media. A storage medium may be any available medium that can be accessed by a computer. By way of example, and not limitation, such computer-readable media can include random-access memory (RAM), read-only memory (ROM), electrically erasable programmable ROM (EEPROM), optical disk storage, magnetic disk storage, other magnetic storage devices, a combination of the computer-readable media types mentioned above, or any other medium that can be used to store computer-executable code in the form of instructions or data structures that can be accessed by a computer.

In addition to the content described in this document, various modifications can be made to the disclosed examples and implementations of the present invention without departing from the scope of the disclosed examples and examples of the present invention. Therefore, the description and examples herein should be interpreted as illustrative and not restrictive. The scope of the present invention should only be determined by reference to the claims.

## Claims

1. A method for knowledge graph-based retrieval-augmented generation, comprising:
receiving a current query;
obtaining a query decomposition result for the current query, wherein the query decomposition result comprises a plurality of key-value pairs, and a key in each key-value pair of the plurality of key-value pairs corresponds to one or more entities in a knowledge graph; and
generating a retrieval result for the current query based on one or more target subgraphs, among a plurality of subgraphs of the knowledge graph, that match the query decomposition result.

2. The method according to Claim 1, further comprising: determining one or more target subgraphs, among the plurality of subgraphs of the knowledge graph, that match the query decomposition result,
wherein determining the one or more target subgraphs that match the query decomposition result comprises:
generating a candidate subgraph ranking list; and
determining, from a set of candidate subgraphs, top-K candidate subgraphs as the one or more target subgraphs according to the candidate subgraph ranking list.

3. The method according to Claim 2, wherein generating the candidate subgraph ranking list comprises:
for each subgraph among the plurality of subgraphs, calculating a matching score between the query decomposition result and the subgraph; and
selecting top-N subgraphs from the plurality of subgraphs as the set of candidate subgraphs according to respective matching scores of the plurality of subgraphs.

4. The method according to Claim 3, wherein calculating the matching score between the query decomposition result and the subgraph comprises:
comparing a value of each key in the plurality of key-value pairs with an attribute value of an entity in the subgraph corresponding to the key; and
calculating the matching score based on a result of the comparison.

5. The method according to Claim 4, wherein:
the query decomposition result and the subgraph are vectorized; and
the comparison is performed on the vectorized query decomposition result and the vectorized subgraph.

6. The method according to Claim 4, further comprising determining a type of the key, wherein the type comprises a pattern type or a textual type, and wherein:
in response to determining that the type is the pattern type, the comparison is used to determine whether the value of the key is identical to the attribute value of the entity corresponding to the key; or
in response to determining that the type is the textual type, the comparison is used to determine a text similarity between the value of the key and the attribute value of the entity corresponding to the key.

7. The method according to Claim 3, wherein calculating the matching score between the query decomposition result and the subgraph comprises: calculating the matching score according to a respective weight of each key in the plurality of key-value pairs.

8. The method according to Claim 3, wherein generating the candidate subgraph ranking list further comprises: re-ranking the set of candidate subgraphs,
wherein re-ranking the set of candidate subgraphs comprises:
for each document matching ranking algorithm among one or more document matching ranking algorithms, determining a ranking result of the set of candidate subgraphs; and
calculating a final ranking score for each candidate subgraph based on respective ranking results determined for the one or more document matching ranking algorithms and a ranking result determined according to the respective matching scores.

9. The method according to Claim 1, wherein obtaining the query decomposition result for the current query comprises:
determining whether a target historical query matching the current query exists in a historical query database, wherein the historical query database stores a plurality of historical queries and a query decomposition result for each historical query among the plurality of historical queries; and
in response to determining that the target historical query exists, reusing the query decomposition result for the target historical query as the query decomposition result for the current query; or
in response to determining that the target historical query does not exist, generating the query decomposition result for the current query by performing a query decomposition operation on the current query using a query decomposition model.

10. The method according to Claim 1, wherein generating the retrieval result for the current query based on the one or more target subgraphs comprises:
for each target subgraph among the one or more target subgraphs, extracting target retrieval data from the target subgraph using a predetermined template; and
performing post-processing on the target retrieval data extracted respectively for the one or more target subgraphs to generate the retrieval result.

11. The method according to Claim 1, further comprising:
generating an answer for the current query based on the retrieval result using an answer generation model.

12. The method according to Claim 11, wherein:
each subgraph among the plurality of subgraphs of the knowledge graph is constructed based on a document recording a historical fault event;
the current query describes a current fault event; and
the answer indicates an operation procedure for resolving the current fault event.

13. An apparatus for knowledge graph-based retrieval-augmented generation, comprising:
a memory; and
a processor coupled to the memory, wherein the processor is configured to execute the method according to any one of Claims 1-12.

14. A computer-readable medium storing a computer program comprising instructions that, when executed by a processor, cause the processor to be configured to execute the method according to any one of Claims 1-12.

15. A computer program product comprising computer-executable instructions that, when executed, cause one or more processors to execute the method according to any one of Claims 1-12.
